# EUROPÄISCHE PATENTANMELDUNG

(11) **EP 1 231 610 A2**
(43) Veröffentlichungstag der Anmeldung: **14.08.2002**
(21) Anmeldenummer: 02405051.0
(22) Anmeldetag: 29.01.2002
(51) Int. Cl.: G21F 9/00

(54) **Verfahren und Vorrichtung zum mechanischen Dekontaminieren von kontaminierten Oberflächen aus mineralischen Materialien**

(30) Priorität: 09.02.2001 CH 2392001
(71) Anmelder: Von Arx AG, 4450 Sissach (CH)
(72) Erfinder: Amherd, René, 8404 Reutlingen (CH)
(74) Vertreter: Patentanwälte Feldmann & Partner AG

(57) **Zusammenfassung**

Es wird vorgeschlagen, kontaminierte Oberflächen, insbesondere radioaktiv kontaminierte Betonflächen und Mauerwerke mit druckluftbetriebenen Schlagwerkzeugen zu bearbeiten. Es hat sich gezeigt, dass dies eine äusserst staubarme Bearbeitungsweise ist, bei der im wesentlichen Partikel in der Grössenordnung von 0,2 mm bis 2,0 mm abgeschlagen werden.
Das Verfahren lässt sich mit einer Vorrichtung (1) realisieren, bei der in einem Gehäuse (2) mehrere Kammern übereinander angeordnet sind. Bevorzugterweise wird zuoberst eine Druckluftzuführungskammer (10) über einen Druckluftanschluss (3) gespiesen. Darunter befindet sich eine Druckluftabsaugkammer (12), die einen Absauganschluss (4) aufweist. Zuunterst ist eine Auffangkammer (13) angeordnet, in der meisselartige Hammerbolzen (51) wirksam sind. Die Hammerbolzen, die Teil der Schlagwerkzeuge (5) sind, ragen im Gehäuse (2) hinaus. Die Schlagwerkzeuge (5) durchsetzen sowohl die Druckluftzuführungskammer (10), die darunter liegende Absaugkammer (12), sowie eine unter der Absaugkammer (12) angeordnete Expansionskammer (11). Die expandierte Luft (11) gelangt in die Umgebung und wird wiederum via der Auffangkammer (13) abgesaugt, die gegenüber der Umgebung durch eine luftdurchlässige Dichtung in Form einer Bürstendichtung (9) begrenzt ist. Die Vorrichtung (1) wird von einer Klammer (6) gehalten, an der eine Halterung (7) vorgesehen ist, die zur Verbindung mit einem Roboterarm dient.

## Beschreibung

Die vorliegende Erfindung betrifft ein Verfahren zum mechanischen Dekontaminieren von kontaminierten Oberflächen aus mineralischen Materialien, insbesondere Betonflächen und Mauerwerken. Obwohl im die Anwendung des Verfahrens beziehungsweise die Verwendung der erfindungsgemässen Vorrichtung auf radioaktiv kontaminierten Oberflächen im Vordergrund steht, ist das Verfahren als auch die Vorrichtung durchaus geeignet, kontaminierte Oberflächen aus mineralischen Materialien durch Abtragung einer kontaminierten Schicht zu dekontaminieren. Insbesondere wird hier an Mauerwerke und Bodenflächen in und um Reaktorgebäude gedacht, jedoch kommen auch Wände oder Böden in Frage, die PCBkontaminiert sind, oder einfach auch mit Farbschmierereien verunstaltete Betonflächen oder Mauerwerke.

Es sind Verfahren und Vorrichtungen zur Reinigung von radioaktiven Oberflächen von Werkstoffen auf der Basis von Zement oder Beton und von Mauerwerken bekannt, bei denen man die kontaminierten Stellen mechanisch abträgt, indem man die Oberfläche maschinell abschleift. Hierzu wird insbesondere auf die Publikation "Strahlenschutzaspekte bei radioaktiven Kontaminationen" von A. Etzweiler at al. verwiesen, erschienen anlässlich der 17. Jahrestagung des Fachverbandes für Strahlenschutz e.V. vom 8. Juni 1983 - 10. Juni 1983 in Aachen. Die hier beschriebenen vollständig trockenen, rein mechanischen Reinigungsverfahren bewirken alle eine grosse Staubentwicklung, und der dabei aufgezeigte apparative Aufwand ist gross. Die bei diesen Verfahren anfallende Staubmenge führt zu einem grossen Verschleppungsproblem, wobei die bereits gereinigten Wände praktisch direkt wieder kontaminiert werden, wenn auch auf einem tieferen Niveau. Entsprechend müssen die Flächen mehrmals bearbeitet werden, und es entsteht ein grosser Anfall an zu entsorgendem Material. Insbesondere bei radioaktiv kontaminierten Flächen sind Verfahren gesucht, mittels denen die Abfallmenge möglichst stark reduziert werden kann, da diese Abfälle gemäss den nationalen Verordnungen zu entsorgen sind. Die Entsorgung radioaktiven Materials ist entsprechend extrem teuer.

Bekanntlich ist die radioaktive Belastung wesentlich auf die Oberfläche beziehungsweise den oberflächennahen Bereich begrenzt. Auf dieser Erkenntnis beruhend, hat man Verfahren gewählt, die typisch für eine geringe Abtragungstiefe sind, nämlich insbesondere Schleif- oder Fräsverfahren. Wie zuvor erwähnt, haben diese beiden Verfahren aber den Nachteil, grosse Staubmengen freizusetzen. Der dabei anfallende Staub ist äusserst fein und entsprechend schwierig zu filtern. Entsprechend müssen auch grosse Anstrengungen unternommen werden, um diesen Feinstaub sicher absaugen und ausfiltern zu können, was wiederum den damit verbundenen Sekundärabfall wesentlich erhöht. Besonders problematisch wird die Angelegenheit dann, wenn die abgesaugte Luft zusätzlich gewaschen werden soll.

Es ist folglich die Aufgabe der vorliegenden Erfindung ein Verfahren zu schaffen, zum mechanischen Dekontaminieren von kontaminierten Oberflächen aus mineralischen Materialien, mit der Zielsetzung die anfallende Abfallmenge zu verringern und die erforderliche Arbeitszeit zu reduzieren.

Diese Aufgabe löst ein Verfahren mit den Merkmalen des Patentanspruches 1.

Anstelle von Schleif- oder Fräswerkzeugen werden hier Schlagwerkzeuge verwendet. Dies erzeugt wesentlich grössere Partikel bei der Abtragung, die gut absaugbar sind und gleichzeitig auch wesentlich einfacher aus der Absaugluft gefiltert werden können. Insbesondere bei der vorteilhaften Verwendung von meisselartigen Hammerbolzen lässt sich Material abtragen, das mehrheitlich Partikel in der Grössenordnung von 0,2 bis 2,0 Millimeter abträgt.

Völlig ungewöhnlich ist dabei die Verwendung von druckluftbetriebenen Schlagwerkzeugen. Die Verwendung von druckluftbetriebenen Geräten war gerade verpönt, weil dadurch eine Verwirbelung des Staubs praktisch noch unterstützt werde. Es wurde jedoch nicht erkannt, dass dank der Verwendung von druckluftbetriebenen Schlagwerkzeugen die Partikelgrösse der abgetragenen Materialien wesentlich grösser ist und die Staubbildung entsprechend bereits von Beginn weg auf ein Minimum reduziert ist. Das Problem wird zusätzlich entschärft, indem erfindungsgemäss der Raum, in dem die Schlagwerkzeuge arbeiten, von der Umgebungsluft luftdurchlässig abgedichtet wird und aus diesem Raum die abgetragenen Partikel abgesaugt werden, wobei das Volumen der Luft, die abgesaugt wird, grösser ist als das Volumen der Luft, das zum Antrieb verwendet wird. Hierbei entsteht in der Umgebung praktisch ein Unterdruck. Um zugleich auch kleinere Luftströme mit hoher Geschwindigkeit zu vermeiden, wird die Antriebsluft für die Schlagwerkzeuge vor der Abgabe an die Umgebung bevorzugterweise in einen Expandierungsraum geführt. Aus dem Expandierungsraum strömt dann die Antriebsluft gleichmässig und mit relativ geringer Strömungsgeschwindigkeit.

Es ist eine weitere Aufgabe der vorliegenden Erfindung eine Vorrichtung zum mechanischen Dekontaminieren von kontaminierten Oberflächen aus mineralischem Material, insbesondere von radioaktiv kontaminierten Oberflächen, zu schaffen, welche die gewünschte vorteilhafte Arbeitsweise zu erzielen vermag.

Eine solche Vorrichtung zeigt der Anspruch 4 auf. Weitere vorteilhafte Ausgestaltungsformen der erfindungsgemässen Vorrichtung gehen aus den Ansprüchen 5 bis 18 hervor und deren Bedeutung ist in der nachfolgenden Beschreibung mit Bezug auf die anliegenden Zeichnungen erläutert.

In der Zeichnung ist vereinfacht eine Ausführungsform der erfindungsgemässen Vorrichtung dargestellt und nachfolgend im Detail beschrieben. Es zeigt:
- Figur 1: eine perspektivische Darstellung der erfindungsgemässen Vorrichtung in der Gesamtansicht und
- Figur 2: einen mittigen Vertikalschnitt durch die Vorrichtung gemäss der Figur 1 sowie
- Figur 3: einen Axialschnitt durch ein Schlagwerkzeug, wie mehrere in der Vorrichtung gemäss den Figuren 1 und 2 angebracht sind.

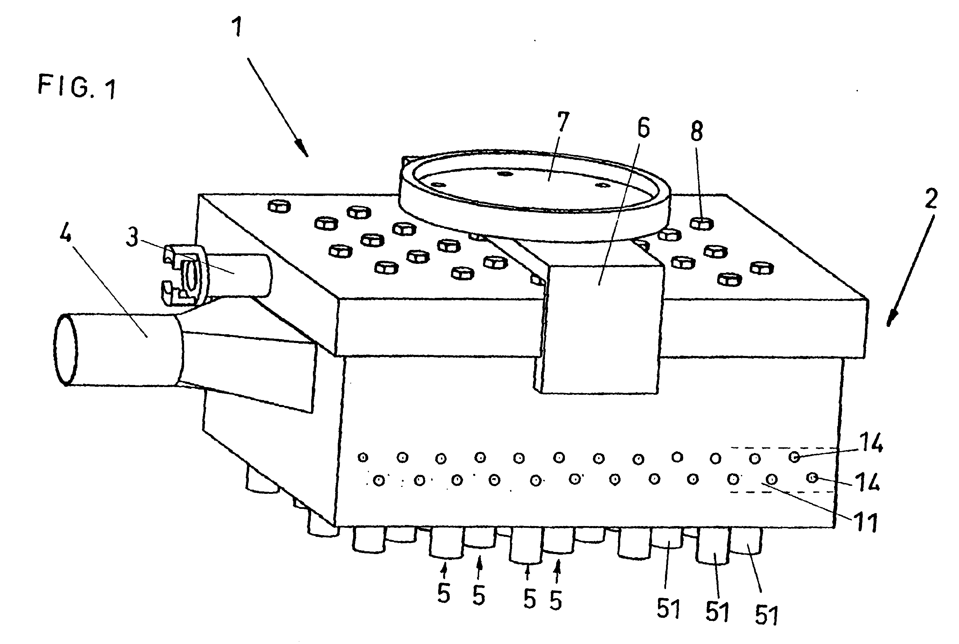

Vorerst wird die erfindungsgemässe Vorrichtung bezüglich ihrer körperlichen Merkmale beschrieben und nachfolgend wird auf die Wirkungsweise eingegangen und das erfindungsgemässe Verfahren nochmals kurz dargelegt. Die Vorrichtung insgesamt ist mit der Bezugszahl 1 bezeichnet. Die Vorrichtung 1 umfasst ein Gehäuse 2 mit einem im oberen Bereich angeordneten Druckluftanschluss 3 und einem an derselben Seite darunter angeordneten Absauganschluss 4. Das Gehäuse hat im wesentlichen eine hier quaderförmig gewählte Gestalt und der oberste, erweiterte Bereich des Gehäuses 2 wird von einer Klammer oder einem Bügel 6 übergreifend gehalten. An der Klammer 6 ist eine Halterung fixiert, die zur Verbindung mit einer mechanischen Betätigung geeignet ist, insbesondere wird diese Halterung verwendet, um eine mögliche Verbindung mit einem Roboterarm zu ermöglichen. Unten aus dem Gehäuse 2 herausragend erkennt man eine Vielzahl schematisch angedeuteter meisselartiger Hammerbolzen, die den wirkenden Teil der im Gehäuse angeordneten Schlagwerkzeuge bilden. Während man die meisselartigen Hammerbolzen 51 in der Figur 1 erkennt, sind die eigentlichen Schlagwerkzeuge 5 nicht ersichtlich. Lediglich deren Befestigung mittels der Schraubverbindungen 8 ist erkennbar. Ferner ist am Gehäuse 2 lediglich von aussen jener Bereich ersichtlich, in dem die Druckluftexpansionskammer 11 angeordnet ist. In diesem Bereich sind entsprechende Entlüftungsöffnungen 14 erkennbar.

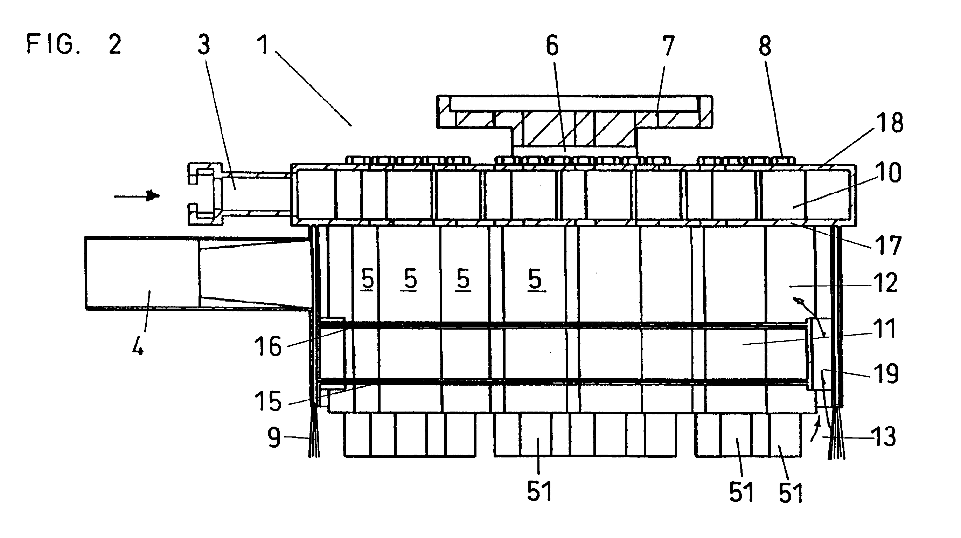

In der Figur 2 ist ein schematischer Vertikalschnitt durch die erfindungsgemässe Vorrichtung dargestellt. In dieser Darstellung sind die einzelnen übereinander angeordneten Kammern im Gehäuse 2 erkennbar. In der hier dargestellten Ausführungsvariante ist die Druckluftzuführungskammer 10 zuoberst dargestellt. Direkt darunter angeordnet ist die Absaugkammer 12, die kommunizierend mit dem Absauganschluss 4 verbunden ist. Ihr in absteigender Richtung folgend ist die Druckluftexpansionskammer 11 erkennbar. Immer zuunterst ist die Auffangkammer 13 angeordnet. Die Auffangkammer 13 wird gegenüber der Umgebung durch eine luftdurchlässige Dichtung 9 begrenzt. Im dargestellten Beispiel hat man als luftdurchlässige Dichtung eine sogenannte Bürstendichtung gewählt. Gegen unten wird die Auffangkammer 13 in der Arbeitslage durch die zu bearbeitende Fläche abgeschlossen, während gegen oben die Auffangkammer 13 von einem Zwischenboden 15 begrenzt wird. Dieser erste Zwischenboden 15 bildet die untere Begrenzungsfläche der Druckluftexpansionskammer 11, die von einem zweiten Zwischenboden 16 gegen oben begrenzt ist. Dieser zweite Zwischenboden 16 bildet gleichzeitig die untere Begrenzung der Absaugkammer 12. Einem Deckel ähnlich wird die Absaugkammer 12 wiederum abgedeckt durch eine untere Begrenzungsfläche 17 der Druckluftzuführungskammer 10. Gegenüber der Umgebung ist schliesslich die Druckluftzuführungskammer 10 durch eine obere Begrenzungsfläche 18 abgedichtet. Die eigentlichen Schlagwerkzeuge 5 sind in relativ dichter Anordnung im Gehäuse 2 untergebracht. Jedes Schlagwerkzeug durchsetzt die übereinander angeordneten Kammern 11 bis 13. Die Durchführung der Schlagwerkzeuge 5 durch die einzelnen Kammern 10 bis 13 erfolgt selbstverständlich in einer dichtenden Form. Damit ist sichergestellt, dass keine kommunizierende direkte Verbindung zwischen jeweils zwei einander benachbarten Kammern existiert.

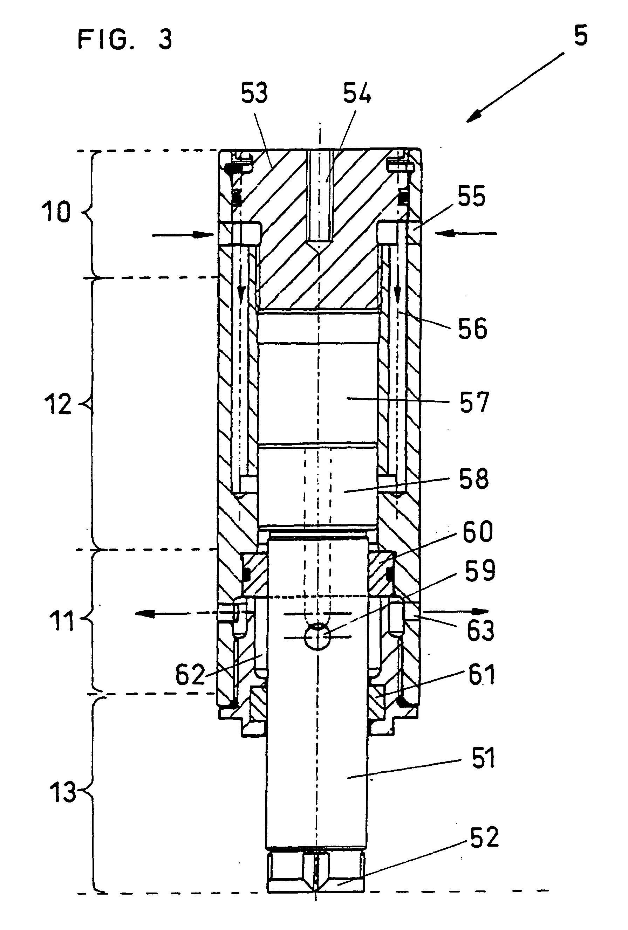

In der Figur 3 ist ein Vertikalschnitt durch ein Schlagwerkzeug 5 dargestellt. Es handelt sich dabei um ein auf dem Markt erhältliches Schlagwerkzeug. Im wesentlichen besteht das Schlagwerkzeug 5 aus einer zylindrischen Gehäusehülse 50 und einem darin geführten meisselartigen Hammerbolzen 51. Der meisselartige Hammerbolzen 51 weist unten entsprechend gestaltete Bearbeitungsflächen 52 auf. Am oberen Ende ist die Gehäusehülse 50 von einem Werkzeugkopf 53 gesichert und gedichtet abgeschlossen. Im Werkzeugkopf 53 ist ein Sackloch 54 mit Innengewinde eingelassen zur schraubbaren Befestigung mittels der Schraubverbindungen 8. In der zylindrischen Gehäusehülse 50 sind Luftzuführungen 55 und Luftleitungen 56 eingeformt. Die Luftleitungen 56 münden in einem Zylinderraum 56, in dem ein Kolben 58 auf und ab bewegt wird. Der Kolben 58 ist einstückig mit dem meisselartigen Hammerbolzen 51 verbunden. Der Durchmesser des Hammerbolzens 51 ist geringer als der Durchmesser des Kolbens 58. Der Hammerbolzen 51 ist in einer oberen und einer unteren Gleitringdichtung 60 und 61 gelagert. Eine kommunizierende Bohrung 59 stellt eine Verbindung durch den Kolben 58 zwischen dem Zylinderraum 57 und dem darunter durch die Gleitringdichtung 60 abgegrenzt vorhandenen Entlüftungsraum 62 dar. Die Luft kann aus dem Entlüftungsraum 62 durch Auslassbohrungen 63 entweichen.

Die von einer hier nicht dargestellten Druckleitung über den Druckluftanschluss 3 in die Druckluftzuführungskammer 10 gelangende Druckluft strömt somit durch die Luftzuführungen 55 in das Schlagwerkzeug 5. Durch das Schlagwerkzeug 5 gelangt die Druckluft pulsierend via den Auslassbohrungen 63 in die Druckluftexpansionskammer 11. Die Druckluftexpansionskammer 11 ist im Verhältnis zu den relativ geringen Luftmengen, die pro Zylinderhub ausgestossen werden, gross. Die entsprechend expandierte und beruhigte Luft strömt somit gleichmässig aus den Entlüftungsöffnungen 14 und bewirkt folglich kaum wahrnehmbare Wirbel in der Umgebungsluft.

Ueber den Absauganschluss 4, an dem ein Unterdruck angelegt ist, wird Luft aus der Absaugkammer 12 gesogen. Die Absaugkammer 12 steht über Rücksaugkanäle 19 mit der Auffangkammer 13 in direkter kommunizierender Verbindung. Es ist vorteilhaft und sinnvoll, die Rücksaugkanäle 19 peripher entlang der äusseren Wand des Gehäuses 12, jedoch im Innenraum, anzuordnen. Die Rücksaugkanäle 19 durchsetzen dabei die Druckluftexpansionskammer 11. Um eine möglichst vorteilhafte Absaugwirkung zu erzielen ist es sinnvoll, die Auffangkammer 13 volumenmässig relativ klein zu halten. Die periphere Anordnung der Rücksaugkanäle 19 wird gewählt, weil die gesamte Vorrichtung 1 über die zu bearbeitende Fläche bewegt wird. Damit wird folglich auch die gesamte zu bearbeitende Fläche durch diesen ringspaltartigen Bereich überstrichen. Bei Verwendung von Bürstendichtungen als luftdurchlässige Dichtungen 9 wird zusätzlich gewährleistet, dass noch leicht haftende Partikel gelöst werden und sogleich auch aufgesaugt werden. Es ist dabei darauf zu achten, dass volumetrisch aus der Auffangkammer 13 mehr Luft ausgesaugt wird als über den Druckluftanschluss 3 zum Betreiben der Schlagwerkzeuge 5 Luft zugeführt wird. Damit wird gewährleistet, dass auch noch Luft aus der Umgebung durch die luftdurchlässige Dichtung 9 in die Auffangkammer 13 gesaugt wird, womit eventuell in der Auffangkammer 13 entstehende geringe Staubanteile nicht in die Umgebung gelangen, sondern direkt rückgeführt werden.

Erste Versuche mit der erfindungsgemässen Vorrichtung haben gezeigt, dass praktisch ohne rekontaminierende Staubentwicklung gearbeitet werden kann. Der allergrösste Anteil der freigesetzten Partikel liegt in der Grössenordnung von 0,2 mm bis 2,0 mm. Vereinzelte kleinere oder grössere Partikel kommen vor. Das Ausfiltern von Partikeln dieser Grössenordnung stellt technisch keinerlei Probleme. Bei Vergleichsmessungen, die anlässlich erster Versuche durchgeführt wurden, wurde festgestellt, dass die Bearbeitungszeit auf praktisch die Hälfte reduziert werden konnte bei gleichzeitiger Abfallreduzierung auf einige Prozente der bisher anfallenden Abfallmengen. Die Einsparungen an Entsorgungskosten sind entsprechend immens.

### Liste der Bezugszahlen

- 1: Vorrichtung
- 2: Gehäuse
- 3: Druckluftanschluss
- 4: Absauganschluss
- 5: Schlagwerkzeuge
- 6: Klammer
- 7: Halterung
- 8: Schraubverbindung
- 9: Luftdurchlässige Dichtung, Bürstendichtung
- 10: Druckluftzuführungskammer
- 11: Druckluftexpansionskammer
- 12: Absaugkammer
- 13: Auffangkammer
- 14: Entlüftungsöffnungen
- 15: erster Zwischenboden
- 16: zweiter Zwischenboden
- 17: untere Begrenzungsfläche
- 18: obere Begrenzungsfläche
- 19: Rücksaugkanäle
- 50: Gehäusehülse
- 51: Meisselartige Hammerbolzen
- 52: Bearbeitungsflächen
- 53: Werkzeugkopf
- 54: Sackloch mit Innengewinde
- 55: Luftzuführungen
- 56: Luftleitungen
- 57: Zylinderraum
- 58: Kolben
- 59: kommunizierende Bohrung
- 60: Gleitringdichtungen
- 61: Gleitringdichtungen
- 62: Entlüftungsraum
- 63: Auslassbohrungen

## Patentansprüche

1. Verfahren zum mechanischen Dekontaminieren von vorzugsweise radioaktiv kontaminierten Oberflächen aus mineralischen Materialien, insbesondere Betonflächen und Mauerwerke, **dadurch gekennzeichnet, dass** die zu reinigende Fläche mittels eines Apparates mit mehreren druckluftbetriebenen in einem Gehäuse angeordneten Schlagwerkzeugen gehämmert wird, wobei die Antriebsluft an die Umgebung abgegeben wird und der Raum, in dem die Schlagwerkzeuge arbeiten, von der Umgebung luftdurchlässig abgedichtet wird und aus diesem Raum abgetragene Partikel abgesaugt werden, wobei das Volumen der Luft die abgesaugt wird grösser ist als das Volumen der Luft, das zum Antrieb verwendet wird.

2. Verfahren nach Anspruch 1, **dadurch gekennzeichnet, dass** die Antriebsluft vor der Abgabe an die Umgebung in einen Expandierungsraum geführt wird.

3. Verfahren nach Anspruch 1, **dadurch gekennzeichnet, dass** die Schlagwerkzeuge mit meisselartigen Hammerbolzen bestückt sind, und so betrieben werden, dass mehrheitlich Partikel in der Grössenordnung von 0,2 mm bis 2,0 mm abgeschlagen werden.

4. Vorrichtung zum mechanischen Dekontaminieren von kontaminierten Oberflächen aus mineralischen Materialien, insbesondere von radioaktiv kontaminierten Betonflächen und Mauerwerken, **dadurch gekennzeichnet, dass** die Vorrichtung mehrere druckluftbetriebene Schlagwerkzeuge aufweist, die in einem Gehäuse mit mehreren übereinander angeordneten Kammern so angeordnet sind, dass jedes Schlagwerkzeug mit jeder Kammer in Wirkverbindung steht.

5. Vorrichtung nach Anspruch 4, **dadurch gekennzeichnet, dass** mindestens eine Druckluftzuführungskammer, eine Druckluftexpansionskammer, eine Absaugkammer und eine Auffangkammer vorhanden sind.

6. Vorrichtung nach Anspruch 5, **dadurch gekennzeichnet, dass** die Absaugkammer und die Auffangkammer eine gemeinsame Kammer bilden.

7. Vorrichtung nach Anspruch 4 oder 5, **dadurch gekennzeichnet, dass** die Druckluftzuführungskammer in der Vorrichtung zuoberst und die Auffangkammer zuunterst angeordnet ist.

8. Vorrichtung nach Anspruch 4, **dadurch gekennzeichnet, dass** die Druckluftexpansionskammer zwischen der direkt darüber liegenden Absaugkammer und der unmittelbar darunter liegenden Auffangkammer angeordnet ist.

9. Vorrichtung nach Anspruch 6, **dadurch gekennzeichnet, dass** die Druckluftexpansionskammer zwischen der direkt darüber liegenden Druckluftzuführungskammer und der unmittelbar darunter liegenden gemeinsamen Auffang- und Absaugkammer liegt.

10. Vorrichtung nach Anspruch 8, **dadurch gekennzeichnet, dass** die Expansionskammer von mehreren Durchführungen durchsetzt ist, die kommunizierende Verbindungen zwischen der Auffangkammer und der Absaugkammer bilden.

11. Vorrichtung nach Anspruch 10, **dadurch gekennzeichnet, dass** die Durchführungen peripher die Expansionskammer durchsetzen.

12. Vorrichtung nach Anspruch 7 oder 8, **dadurch gekennzeichnet, dass** die Auffangkammer gegenüber der Umgebung luftdurchlässig abgedichtet ist.

13. Vorrichtung nach Anspruch 12, **dadurch gekennzeichnet, dass** die luftdurchlässige Abdichtung mittels einer umlaufenden Schürze erfolgt.

14. Vorrichtung nach Anspruch 12, **dadurch gekennzeichnet, dass** die luftdurchlässige Abdichtung mittels einer umlaufenden Bürstendichtung erfolgt.

15. Vorrichtung nach Anspruch 7, **dadurch gekennzeichnet, dass** die Druckluftzuführungskammer die darunter befindliche Kammer überragt und von einer übergreifenden Klammer gehalten ist, die als Halterung für einen damit verbindbaren Roboterarm oder Handlinggerät dient.

16. Vorrichtung nach Anspruch 7, **dadurch gekennzeichnet, dass** die Schlagwerkzeuge lösbar mit der Druckzuführkammer verbunden sind und sämtliche vorhandenen Kammern dichtend durchsetzen.

17. Vorrichtung nach Anspruch 16, **dadurch gekennzeichnet, dass** die lösbaren Schlagwerkzeuge mittels von aussen das Gehäuse durchsetzenden Schraubverbindungen gehalten sind.

18. Vorrichtung nach Anspruch 4, **dadurch gekennzeichnet, dass** die Schlagwerkzeuge mit auswechselbaren, meisselartigen Hammerbolzen bestückt sind.
